# EUROPÄISCHE PATENTSCHRIFT

(11) **EP 1 278 478 B1**
(45) Veröffentlichungstag und Bekanntmachung des Hinweises auf die Patenterteilung: **24.05.2006**
(21) Anmeldenummer: 01933758.3
(22) Anmeldetag: 27.03.2001
(51) Int. Cl.: A61C 13/00, B05C 17/005

(54) **MODELLIERVORRICHTUNG**
CARVING DEVICE
DISPOSITIF DE FAçONNAGE

(30) Priorität: 04.05.2000 DE 20007821 U
(43) Veröffentlichungstag der Anmeldung: 29.01.2003
(73) Patentinhaber: Furtwängler, Beate, 78050 Villingen-Schwenningen (DE)
(72) Erfinder: Furtwängler, Bernhard, 78050 Villingen-Schwenningen (DE)
(74) Vertreter: Sobisch, Peter
(86) Internationale Anmeldenummer: PCT/EP2001/003459
(87) Internationale Veröffentlichungsnummer: WO 2001/082823

(56) Entgegenhaltungen:
- DE-A- 3 346 254
- FR-A- 2 602 669
- US-A- 4 582 488

## Beschreibung

Die Erfindung bezieht sich auf eine Modelliervorrichtung entsprechend dem Oberbegriff des Anspruchs 1, und wie in US-A-4 582 488 offenbart.

Derartige Vorrichtungen sind in unterschiedlichsten Funktionszusammenhängen, insbesondere für unterschiedliche Stoffe an sich bekannt. Ein wichtiges Anwendungsgebiet betrifft die Zahnprothetik, insbesondere das Aufbringen von Wachs auf den Kronenbereich eines zu modellierenden Zahnes. Dies ist zum einen derart bekannt, dass mittels einer Modellierspitze Wachs in einer fließfähigen, das heißt ein plastisches Modellieren ermöglichenden Konsistenz aufgenommen, auf den Kronenbereich übertragen und hier anschließend bearbeitet wird. Da relativ kleine räumliche Strukturen zu bearbeiten sind, erfordert diese Tätigkeit ein sehr genaues Dosieren des übertragenen Wachses. Auch gestaltet sich das Aufnehmen von fließfähigem Wachs mittels einer Modellierspitze an einer entfernt vom Bearbeitungsort gelegenen Stelle und dessen Übertragung mühsam und zeitaufwendig.

Aus Dental-Labor XLVIII, Heft 4/2000 ist eine Modelliervorrichtung bekannt, bei welcher innerhalb eines Modelliergerätes ein eine Wachspatrone aufnehmender Tank vorgesehen ist, der gleichermaßen wie eine Modellierspitze elektrisch beheizbar ist. Über eine mechanische Drucktaste kann eine Dosierung des aus der Modellierspitze austretenden Wachses vorgenommen werden und es steht das Modelliergerät mit einer Energieversorgungseinheit in Wirkverbindung.

Aus dem DE 94 12 336 U1 ist eine Vorrichtung zur Wachsmodellation von Gussmodellen der Dentaltechnik bekannt, welche aus einem langgestreckten, schreibgeräteähnlichen Grundkörper besteht, der als Wachsvorratsraum dient und dessen einer trichterförmiger Endbereich mit einer Ausgangsöffnung und einem Kupplungsteil versehen ist, auf welches übliche Modellierspitzen aufgesteckt werden können. Der Wachsvorratsraum ist von elektrisch beheizbaren Heizelementen in der Form einer Heizmatte umgeben, die mit einem Thermostaten, Einstellelementen und einer Anzeigeeinrichtung in Verbindung steht. Nachdem der gesamte Wachsvorratsraum einer Beheizung unterzogen wird, ist zwischen dem Gehäuse der Grundkörpers und der Heizmatte eine Wärmedämmschicht angebracht. Der der Modellierspitze abgekehrte Endbereich des Grundkörpers dient dem Einführen an sich bekannter Wachspatronen in den Wachsvorratsraum, wobei ebenfalls über diesen Endbereich eine pneumatisch zu betätigende Kolben-Zylinder-Einheit in den Grundkörper eingesetzt ist, welche einen Vorschubantrieb bildet. Zur Steuerung ist die Vorrichtung mit Sensortasten versehen, die sich am vorderseitigen, der Modellierspitze zugekehrten Ende des Grundkörpers befinden. In Abhängigkeit von der Temperatur des schmelzflüssigen Wachses innerhalb des Wachvorratsraumes kann sich eine genaue Dosierung des auszutragenden Wachses schwierig gestalten. Arbeitstechnisch hinderlich wirkt sich aus, dass an das, der Modellierspitze abgekehrte Ende nicht nur Leitungen zur Druckluftversorgung sondern auch zur Versorgung mit elektrischer Energie angesetzt sind. Diese erschweren nicht nur die Sicht auf den unmittelbaren Arbeitsbereich der Modellierspitze sondern darüber hinaus exakte Bewegungen derselben. Als weiterer ungünstiger Umstand stellt sich die vollständige Einbindung des Wachsaufnahmeraums in einen wärmedämmenden Werkstoff dar, da dies zwangsläufig zu einer Zunahme der Querschnittsabmessungen der Vorrichtung führt.

Aus der DE 33 46 254 A1 ist eine weitere vergleichbare Vorrichtung bekannt, die aus einem langgestreckten Grundkörper besteht, bei welchem zu verarbeitende Wachspatronen entweder über das rückseitige oder das vorderseitige Ende des Grundkörpers einführbar sind, das heißt jeweils unter vorheriger Demontage der sich an diesen beiden Enden befindlichen Funktionselemente. In Abweichung von dem Gegenstand des DE 94 12 336 U1 wird jedoch lediglich eine Beheizung des vorderseitigen, das heißt der Modellierspitze zugekehrten Endes vorgenommen, so dass die Notwendigkeit entfällt, den Wachsaufnahmeraum in eine wärmedämmende Umhüllung einzubinden. Der eingesetzte Vorschubantrieb kann einen Elektromotor oder auch eine, eine Druckluftversorgung benötigende Kolben-Zylinder-Einheit aufweisen. Nachteilig wirkt sich jedoch auch bei dieser bekannten Vorrichtung der Umstand aus, dass am rückseitigen, das heißt der Modellierspitze abgekehrten Ende sich Anschlussleitungen zur Versorgung mit Elektroenergie und gegebenenfalls auch zur Druckluftversorgung befinden. Schließlich gestaltet sich ein Einsetzen einer zu verarbeitenden Wachspatrone vergleichsweise kompliziert.

Es ist vor diesem Hintergrund die Aufgabe der Erfindung, eine gattungsgemäße Modelliervorrichtung dahingehend auszugestalten, dass neben der Handhabbarkeit des Modelliergerätes die Dosierbarkeit der aufzutragenden Substanz und der Auftragvorgang als solcher erleichtert werden. Gelöst ist diese Aufgabe bei einer solchen Vorrichtung durch die Merkmale des Kennzeichnungsteils des Anspruchs 1.

Innerhalb des Modelliergerätes befindet sich in an sich bekannter Weise ein motorischer Vorschubantrieb für die zu verarbeitende Substanz ist, dessen Zweckbestimmung darin liegt, diese Substanz zur Verarbeitung in Richtung auf die Modellierspitze hin zu bewegen. Es ist ferner eine solche Beheizungseinrichtung vorgesehen, die dazu eingerichtet ist, die Substanz im Wesentlichen lediglich an dem, der Modellierspitze zugekehrten Ende des Gerätes und insbesondere bis zum erfolgen Austritt aus der Mündung der Modellierspitze zu beheizen. Es wird mit anderen Worten keine vollständige Beheizung mit dem Ziel vorgenommen, die Substanz komplett in einen flüssigen Zustand zu versetzen, welches neben anderen Nachteilen nicht nur mit einem gewissen Zeitaufwand, sondern gleichermaßen auch mit einem dementsprechenden Energieaufwand verbunden wäre. Es wird somit lediglich der Bereich der Substanz einer Beheizung unterworfen, der während des Übertragungsvorgangs auf den zu modellierenden Kronenbereich, nämlich des Austretens aus der genannten Mündung einer plastischen Verformung unterliegt und dementsprechend hinreichend fließfähig sein muss. Schließlich ist eine Schalteinrichtung vorgesehen, die unmittelbar mit dem Modelliergerät in Verbindung steht und während des Arbeitsvorgangs der unmittelbaren Einwirkung des Nutzers des Modelliergerätes ausgesetzt ist. Über diese Schalteinrichtung werden sowohl der Vorschubantrieb als auch die Beheizungseinrichtung gesteuert. Vorzugsweise ist hierbei vorgesehen, dass die Vorschubgeschwindigkeit stufenlos innerhalb eines festgesetzten, an den Bearbeitungsprozess angepassten Geschwindigkeitsbereiches regelbar ist. Gleiches gilt für die Beheizungseinrichtung. Insbesondere ist die in die zu verarbeitende Substanz einzubringende Wärme vorzugsweise ebenfalls innerhalb eines festgesetzten Bereichs regelbar. Der Nutzer des Modelliergerätes hat somit die Möglichkeit, sowohl den Vorschub als auch die Konsistenz der zu verarbeitenden Substanz in einer an den Arbeitsvorgang sowie die Eigenschaften der Substanz angepassten Weise zu steuern.

Erfindungsgemäß ist der Grundkörper des Modelliergerätes mit einer Öffnung versehen, die zum Einführen der im Ausgangszustand als Festkörper vorliegenden Substanz bestimmt ist. Diese Öffnung ist verschließbar, wobei jeder, die Handhabbarkeit des Modelliergerätes nicht beeinträchtigende Klapp- oder Schließmechanismus benutzbar ist.

Die wesentlichen Komponenten des erfindungsgemäßen Vorschubantriebs werden durch einen Elektromotor, eine Gewindespindel und eine Spindelmutter gebildet, wobei beispielsweise die Gewindespindel unverdrehbar innerhalb des Modelliergerätes gelagert ist, so dass über die Drehbewegung der Spindelmutter eine Vorschubbewegung in Längsrichtung des Modelliergerätes bereitgestellt werden kann. Die Drehzahl des Motors sowie die Steigung der Gewindespindel sind mit Hinblick auf den Regelbereich der Vorschubgeschwindigkeit ausgelegt. Über einen Kolben, der mit der Gewindespindel in Verbindung steht, wird ein großflächiges Kraftübertragungselement zur Verfügung gestellt, welches unmittelbar mit der zu verarbeitenden Substanz in Verbindung steht. Sowohl aus Gewichtsgründen als auch zur Vermeidung einer Sichtbehinderung ist das Kabel vorzugsweise am vorderseitigen, das heißt der Modellierspitze zugekehrten Ende des Modelliergerätes an dieses angesetzt und erstreckt sich - in Richtung zur Vorderseite hin - unter einem spitzen Winkel zur Längsachse des Modelliergerätes. Auch diese Ausgestaltung dient der Vereinfachung der praktischen Handhabung und damit der Sicherstellung eines qualitativ hochwertigen Arbeitsergebnisses.

Die Merkmale der Ansprüche 2 und 3 sind auf die nähere Ausgestaltung der Beheizungseinrichtung gerichtet. Diese kann hiernach durch eine Spulenanordnung gebildet werden, über die eine Beheizung des Teiles der zu verarbeitenden Substanz vorgenommen wird, der dem vorderseitigen, das heißt der Modellierspitze benachbarten Bereich zugekehrt ist. Besonders vorteilhaft können mehrere, voneinander unabhängige Spulen vorgesehen sein, deren Heizleistungen unabhängig voneinander steuerbar sind. So kann über eine Spule eine Grundbeheizung vorgenommen werden, wobei eine weitere Spule lediglich zur Bereitstellung von Leistungsspitzen ausgelegt ist. Die Spulen können von ihrer Wärmeleistung her unabhängig voneinander steuerbar sein. Anstelle von Spulenanordnungen können jedoch auch sonstige flächenhafte Heizleiterstrukturen vorgesehen sein, die infolge Stromdurchgangs eine Erwärmung erfahren und zur Wärmeübertragung auf die zu verarbeitende Substanz eingerichtet sind.

Entsprechend den Merkmalen des Anspruchs 4 weist die Modellierspitze einen gegenüber der Längsachse des Modelliergerätes abgewinkelten Endabschnitt auf. Ersatzweise kommt auch eine dementsprechende Krümmung in Betracht. Diese Ausgestaltung eröffnet eine verbesserte Blickrichtung des jeweiligen Nutzers auf die Stelle, auf die aktuell gerade Substanz aufgetragen wird. Gleiches gilt für die Stelle, an der unter Benutzung der Modellierspitze ein Modelliervorgang durchgeführt wird. Diese Ausgestaltung verbessert somit die Bearbeitungsmöglichkeiten in der Kauflächentiefe.

Die Merkmale der Ansprüche 5 und 6 sind auf die Schalteinrichtung gerichtet. Deren Schaltelemente werden hiernach durch Sensoren gebildet, die erschütterungsfreie Schaltvorgänge ermöglichen, so dass sowohl der Auftragsvorgang als auch der Dosier- und Modelliervorgang durch diese Schaltvorgänge nicht beeinträchtigt werden. Das Ausmaß, in dem eine Beheizung und gleicherma-ßen eine Vorschubbewegung steuerbar sind, ist in Abhängigkeit von den Eigenschaften der zu verarbeitenden Substanz gewählt.

Gemäß den Merkmalen des Anspruchs 8 ist die Modellierspitze des Modelliergerätes zusätzlich in gesteuerter Weise beheizbar. Auf diesem Wege kann der Vorschub und der Dosiervorgang der zu verarbeitenden Substanz weiter verbessert werden.

Schließlich kann das Modelliergerät gemäß den Merkmalen des Anspruchs 9 mit einem Endschalter versehen sein, der den automatischen Rücklauf des Vorschubantriebs in seine Ausgangslage dann auslöst, wenn die zu verarbeitende Substanz aus dem Modelliergerät ausgetragen ist.

Die Merkmale des Anspruchs 10 sind auf ein weiteres Konstruktionsprinzip des erfindungsgemäßen Vorschubantriebs gerichtet. Hiernach ist eine Spindelmutter fest, das heißt axial unverschiebbar und unverdrehbar innerhalb des langgestreckten Grundkörpers des Modelliergerätes angeordnet, wobei eine Gewindespindel vorgesehen ist, die an ihrem einen Ende mit dem, Kolben in Verbindung steht, der zum Vorschub der zu verarbeitenden Wachspatrone bestimmt ist und die an ihrem gegenüberliegenden Ende mit dem Motor in Verbindung steht. Sowohl der Kolben als auch der Motor sind unverdrehbar innerhalb des Gehäuses geführt, so dass eine Drehbewegung auf die Gewindespindel eine dementsprechende axiale Verschiebung der gesamten Baugruppe, bestehend aus Gewindespindel, Motor und Kolben bewirkt. Die innerhalb des Gehäuses fest angeordnete Spindelmutter befindet sich an dem, der Modellierspitze, insbesondere der genannten Ausnehmung abgekehrten Ende des Gehäuses.

Die Merkmale der Ansprüche 11 und 12 sind auf eine erste weitere Ausgestaltung dieses Konstruktionsprinzips gerichtet. So besteht die Möglichkeit, die Spindelmutter grundsätzlich lediglich nach Art einer Halbschale auszubilden, so dass ein Gewindeeingriff mit dem Gewinde der Spindelwelle lediglich über einen Umfang von 180° besteht. Es ist festgestellt worden, dass ein solcher eingeschränkter Gewindeeingriff für die Zwecke des Gegenstands der Erfindung grundsätzlich als ausreichend angesehen werden kann. Darüber hinaus kann die Spindelmutter auch als längsgeteilter Körper ausgebildet sein, der aus zwei Halbschalen besteht, die in ihrer Gesamtheit zu einer vollständigen zylindrischen Schale komplettierbar sind. Beide Varianten bieten grundsätzlich einfache Möglichkeiten, den Gewindeeingriff zwischen der Spindelmutter und der Gewindespindel zu lösen, so dass im gelösten Zustand die gesamte Baugruppe, bestehend aus dem Kolben, der Gewindespindel und dem Motor innerhalb des Gehäuses manuell verschiebbar ist. Eine solche Nutzung bietet sich an, nachdem das erfindungsgemäße Gehäuse mit einer seitlichen Ausnehmung versehen ist, über welche eine Wachspatrone einsetzbar ist. Auf diese Weise wird die Möglichkeit eröffnet, nach Verbrauch einer Wachspatrone durch manuellen Eingriff über die genannte Ausnehmung den Kolben in seine rückwärtige, das heißt zum Einsetzen einer neuen Wachspatrone geeignete Position zurückzuschieben.

Die Merkmale der Ansprüche 13 und 14 sind auf eine weitere Ausgestaltung des Prinzips der längsgeteilten Spindelmutter gerichtet. Beide Halbschalen der Spindelmutter sind hiernach in einem aus einem elastomeren Werkstoff bestehenden Lagerring innerhalb des Gehäuses des Modelliergerätes aufgenommen und es sind ferner in einer einander diametral gegenüberliegenden Position Trennkörper vorgesehen, die vorzugsweise eine keilförmige Gestalt aufweisen, die radial bezüglich des ebenfalls längsgeteilt ausgebildeten Lagerringes in dem Spalt zwischen den beiden Ringhalbschalen des Lagerringes einpressbar sind, so dass nach Maßgabe dieser Bewegung auf die Halbschalen der Spindelmutter eine diese senkrecht zu ihrer Teilungsebene voneinander trennende Kraft ausübbar ist. Infolge der Aufnahme in dem elastomeren Lagerring ist eine solche Bewegung gegebenenfalls unter elastischer Verformung des Lagerrings möglich und es ist dieser zu diesem Zweck von seinen Dimensionen und seinem Werkstoff her entsprechend angelegt. Gleichzeitig wird auf diesem Wege über den Lagerring die nötige Rückstellkraft bereitgestellt oder es wird hierzu zumindest ein Beitrag geleistet. Erfindungswesentlich ist ferner, dass zur Betätigung der Trennkörper eine ohnehin vorhandene Schiebemuffe herangezogen wird. Beispielsweise können die Trennkörper aus der äußeren Oberfläche des Modelliergerätes geringfügig herausragen, so dass diese infolge eines außenseitigen "Überfahrens" mittels der Schiebemuffe radial einwärts gepresst werden. Ebenfalls in Ausgestaltung dieses Prinzips kann vorgesehen sein, dass die Keilflächen beider Trennkörper mit dem Lagerring in Verbindung stehen, beispielsweise angeklebt bzw. anvulkanisiert sind und dass infolge des Überfahrens der radial äußeren Abschnitte der Trennkeile eine Werkstoffverdrängung in radial einwärtiger Richtung stattfindet und die Lagerringhälften voneinander entfernt werden. Im voneinander entfernten Zustand der Lagerringe, bei welchem ein Gewindeeingriff zwischen der Gewindespindel und der Spindelmutter gelöst ist sind die Trennkörper somit elastisch verformt, so dass aus diesem Verformungszustand wiederum Rückstellkräfte abgeleitet werden können, die nach Entfemen der Schiebemuffe freigesetzt werden und die Lagerringe zusammenziehen, so dass wiederum ein Gewindeeingriff zwischen der Spindelmutter und der Gewindespindel hergestellt ist.

Das letztgenannte Prinzip wird entsprechend den Merkmalen des Anspruchs 15 dahingehend weiter präzisiert, dass im aneinanderliegenden Zustand der Halbschalen der Spindelmutter deren Position relativ zueinander formschlüssig fixiert ist. Dies kann beispielsweise über Eingriffe bewirkt werden, die nach Art von Feder-Nut-Verbindungen ausgebildet sind, wobei durch eine konische Gestaltung der Feder-Nut-Verbindungen gleichzeitig eine Führungswirkung auf die Halbschalen ausgeübt werden kann.

Das erstgenannte Antriebsprinzip, bei welchem die Spindelmutter lediglich durch eine Halbschale gebildet ist, kann entsprechend den Merkmalen des Anspruchs 16 dahingehend realisiert sein, dass die Halbschale den Verschluss der Ausnehmung in der Wandung des Gehäuses des Modelliergerätes bildet, die ansonsten zum Einsetzen einer Wachspatrone bestimmt ist. Dies bedeutet, dass an der Innenseite der Halbschale ein Gewindeprofil angeformt ist, welches sich über einen Umfangswinkel von vorzugsweise 180° erstreckt. Dies bedeutet auch, dass sich ein Lösen des Gewindeeingriffs zwischen dieser Spindelmutter und der Gewindespindel außerordentlich einfach bewirken lässt, in dem lediglich die genannte Ausnehmung durch Entfernen der Halbschale freigelegt ist.

Gemäß den Merkmalen der Ansprüche 17 und 18 ist das Modelliergerät mit einer Anzeigeeinrichtung versehen, über welche dem Nutzer des Gerätes signalisiert wird, wieweit die eingesetzte Wachspatrone bereits verbraucht ist, so dass gegebenenfalls demnächst eine neue Wachspatrone einzusetzen ist. Dies wird dadurch erreicht, dass die Verschiebeposition des Kolbens, des Motors oder eines anderen, mit dieser in Längsrichtung des Gerätes verschiebbaren Baugruppe in Verbindung stehendes Funktionselement zur Außenseite des Gerätes hin sichtbar angezeigt wird. Lediglich beispielhaft kann dies mittels eines Signalkörpers bewirkt werden, der an dem Motorgehäuse angeformt ist, wobei dieser Signal körper in einer äußeren Ausnehmung des Gehäuses gleitfähig aufgenommen ist.

Mittels einer Feder entsprechend den Merkmalen des Anspruchs 19 besteht die Möglichkeit, die Wachspatrone relativ zu dem Kolben innerhalb des Gehäuses des Gerätes stets in einer definierten Position zu halten. Ein Vorschub der Wachspatrone ist somit jederzeit spielfrei auslösbar. Dieser Umstand wirkt sich günstig hinsichtlich einer genaueren Dosierung des auszutragenden Wachses aus. Infolge einer definierten Position der Wachspatrone innerhalb des Gehäuses lassen sich gleichermaßen auch reproduzierbare Aufheizbedingungen einstellen, ein Umstand, der für die rasche Betriebsbereitschaft des Modelliergerätes von Bedeutung ist.

Nachdem in der Substanz der Wachspatrone Verunreinigungen nicht sicher ausgeschlossen werden können, jedoch auch aufgrund des außerordentlich gering bemessenen Durchströmungsquerschnitts der Modellierspitze ist stets mit Verstopfungen dieser Querschnitte zu rechnen. Ein Reinigen zwecks Freilegens dieser Querschnitts gestaltet sich jedoch aufgrund deren geringer Abmessungen zeitaufwendig. Entsprechend den Merkmalen der Ansprüche 20 und 21 ist zu diesem Zweck ein Sieb bzw. ein Filter vorgesehen, dessen Maschen- bzw. Porenweite mit Hinblick auf ein Zurückhalten störender Fremdkörper hin angelegt ist. Dieses Sieb ist auswechselbar innerhalb des Gerätes vorgesehen, eine Eigenschaft, die vorteilhaft durch ein Einsatzteil bewerkstelligt werden kann, welches lösbar mit innenseitigen Strukturen des Gerätes in Verbindung steht. Dies kann über eine Verschraubung, einen Bajonettverschluss oder dergleichen geschehen. Ein Auswechseln des Siebes ist somit lediglich durch eine Handhabung des wesentlich größeren Einsatzteiles gekennzeichnet.

Die Menge an aus der Modellierspitze austretender verflüssigter Substanz sollte mit Hinblick auf die Bearbeitungsgenauigkeit den tatsächlichen Bedürfnissen so genau wie möglich angepasst werden. Ein Abschalten des Vorschubs hingegen ist aufgrund der, innerhalb der Modellierspitze sowie des, sich an diese innerhalb des Gehäuses des Modelliergerätes anschließenden Teilräumen befindlichen flüssigen Wachsanteile mit einem unvermeidbaren Nachfließen verbunden, und zwar in Abhängigkeit von der Konsistenz bzw. der Temperatur des Wachses, und der in den genannten Teilräumen herrschenden Druckverhältnisse. Zur Unterbindung dieser Störung ist entsprechend den Merkmalen des Anspruchs 22 ein schaltbares Ventil vorgesehen, welches sich zweckmäßigerweise am Ausgang des Gehäuses, und zwar unmittelbar vor dem Eintrittsquerschnitt der Modellierspitze befindet. Vorzugsweise kommt hier ein elektromagnetisch schaltbares Ventil in Betracht, welches über einen Sensor, der an der Vorderseite, das heißt an der, der Modellierspitze zugekehrten Seite angebracht ist, nutzerseitig gesteuert wird. Ein Schließen dieses Ventils verhindert ein weiteres Nachfließen an verflüssigten Wachsanteilen aus dem Durchströmungskanal der Modellierspitze aufgrund des infolge eines Schließens des Ventils sich entwickelnden Vakuums sowie der auch aufgrund der geringen Querschnittsabmessungen ausgeübten Kapillarwirkung. Ein Schlie-ßen dieses Ventils kann auch automatisch ausgelöst werden und schaltungstechnisch mit einem Beenden des Vorschubs verbunden werden.

Ein Abschalten der Vorschubbewegung ist in der Folge zunächst noch mit einem Aufrechterhalten der Druckverhältnisse innerhalb des Gerätes gekennzeichnet, woraus - wie oben dargelegt - sich eine Tendenz zum Nachfließen aus der Modellierspitze heraus ergibt. Dadurch, dass entsprechend den Merkmalen des Anspruchs 23 die, auch die Steuerung des Vorschubs bewirkende Energieversorgungseinheit mit der Maßgabe angelegt ist, dass nach Beendigung eines Vorschubvorgangs der Kolben um eine definiertes Streckenelement zurückgezogen wird, das heißt in Richtung von der Modellierspitze fort, wird diese Tendenz zumindest stark vermindert. Diese Maßnahme dient somit dem Komfort bei der praktischen Handhabung des Gerätes und kann automatisiert ebenfalls nach Maßgabe vorgebbarer Streckenlemente ausgelöst werden. Die Streckenelemente sollten dahingehend gewählt werden, dass die eingangs erwähnte Feder ihre Wirkung unabhängig von dem erfolgten Zurückziehen des Kolbens aufrechterhält.

Entsprechend den Merkmalen des Anspruchs 24 enthält die eine elektrische Batterie bzw. einen Akkumulator umfassen kann. Die erfindungsgemäße Vorrichtung kann somit netzunabhängig betrieben werden.

Die Merkmale der Ansprüche 25 und 26 sind auf weitere vorteilhafte Ausgestaltungen der Vorrichtung gerichtet. So steht die Modellierspitze in austauschbarer Weise mit dem Modelliergerät in Verbindung, so dass gegebenenfalls in Abhängigkeit von den vorzunehmenden Modelliervorgängen unterschiedliche Modellierspitzen zum Einsatz kommen können. Eine dreieckige Querschnittsgestaltung des langgestreckten, im Prinzip schreibgeräteähnlichen Modelliergeräte dient der Verbesserung des Handhabungskomforts.

Hauptanwendungsgebiet der Modelliervorrichtung ist der Arbeitsvorgang des Aufwachsens in der Zahnprothetik. Das vorstehend beschriebene Konstruktionsprinzip kann jedoch in zahlreichen weiteren Anwendungsfällen eingesetzt werden, wo immer im Ausgangszustand feste Massen, beispielsweise Kunststoff in dosierter Weise auf Werkstücke aufzutragen und im noch fließfähigen Zustand modelliert werden müssen. Schließlich kommt eine Anwendung auch bei Vorgängen des Lötens grundsätzlich in Betracht.

Die Erfindung wird im Folgenden unter Bezugnahme auf die in den Zeichnungen schematisch wiedergegebenen Ausführungsbeispiele näher erläutert werden. Es zeigen:
Fig. 1 eine Ansicht der erfindungsgemäßen Modelliervorrichtung;
Fig. 2 eine vergrößerte Teildarstellung eines Bereichs II des erfindungsgemä-ßen Modelliergerätes im Axialschnitt;
Fig. 3 eine vergrößerte Teildarstellung der Spitze des erfindungsgemäßen Modelliergerätes im Axialschnitt;
Fig. 4 eine Teildarstellung des der Spitze des Modelliergerätes zugekehrten Endes im Axialschnitt;
Fig. 5 eine Darstellung ähnlich derjenigen gemäß Fig. 4 einer anderen Ausführungsform des Modelliergerätes;
Fig. 6 eine Teildarstellung des der Spitze abgekehrten Endes eines Modelliergerätes im Axialschnitt:;
Fig. 7 eine Teildarstellung einer Einzelheit VII der Fig. 6 in der Seitenansicht;
Fig. 8 eine Stirnansicht des in Fig. 7 gezeigten Bauteils entsprechend einer Blickrichtung VIII;
Fig. 9 eine Querschnittsdarstellung einer weiteren Ausführungsform eines erfindungsgemäßen Gerätes entsprechend einer Schnittebene IX - IX der Fig. 10;
Fig. 10 eine Seitenansicht des in Fig. 9 gezeigten erfindungsgemäßen Gerätes in teilweiser Schnittdarstellung.

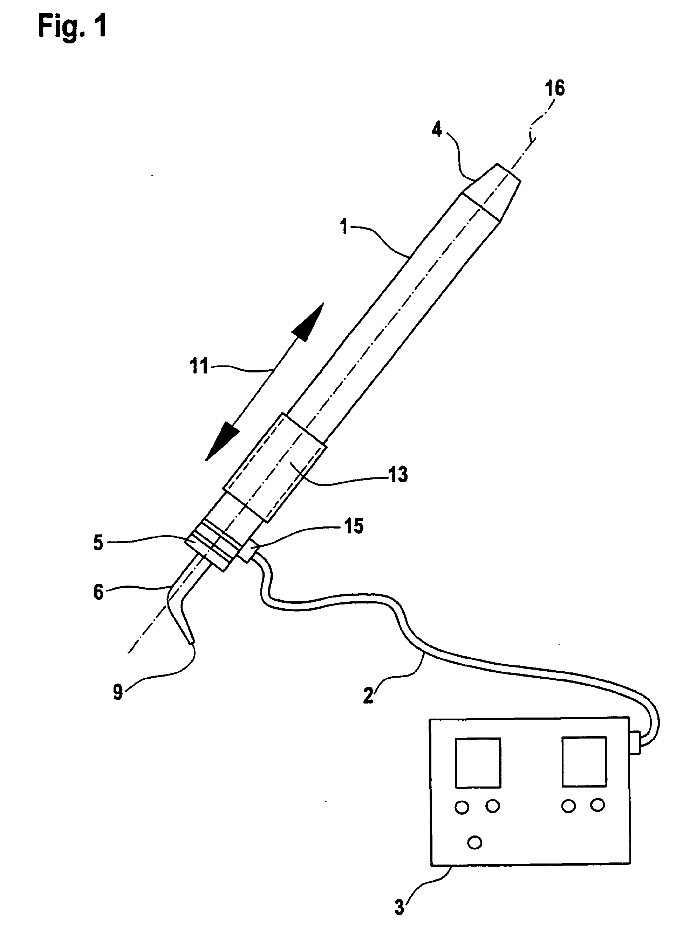

Die Fig. 1 bis 3 gezeigte erfindungsgemäße Modelliervorrichtung besteht global aus einem manuell zu führenden Modelliergerät 1, welches über ein Kabel 2 mit einer Energieversorgungseinheit 3 in Verbindung steht. Die Energieversorgungseinheit 3 ist für den Anschluss an ein übliches elektrisches Netz konzipiert sowie zur Bereitstellung einer Ausgangsspannung und eines Ausgangsstromes, die in Abhängigkeit von den elektrischen Funktionen des Modelliergerätes 1 bemessen und insbesondere regelbar sind. Die Energieversorgungseinheit kann somit allgemein auch für Steuerungszwecke eingerichtet sein.

Das Modelliergerät 1 besteht aus einem röhrenförmigen Grundkörper, dessen seinem einen Ende 4 zugekehrter Bereich unter anderem zur Aufnahme eines Vorschubantriebes und dessen diesem gegenüberliegendes Ende 5 zur auswechselbaren Aufnahme einer Modellierspitze 6 bestimmt und eingerichtet ist.

Der, der Modellierspitze 6 zugekehrte Teil des Grundkörpers ist als Hohlraum konzipiert, der zur Aufnahme eines stangenförmigen Wachskörpers 7 bestimmt ist. Wesentlich ist, dass der, dem Ende 5 zugekehrte Teil des Hohlraumes und insbesondere die Modellierspitze 6 elektrisch beheizbar sind, welches dadurch erreichbar ist, dass diese Teile gegenüber den übrigen Abschnitten des Grundkörpers elektrisch isoliert angeordnet und als Teile eines elektrischen, somit nach Maßgabe einer Spannungsbeaufschlagung beheizbaren Leiters konzipiert sind. Auch steht der genannte Hohlraum mit dem zentralen Kanal 8 der Modellierspitze 6 in durchgängiger Verbindung, dessen Mündung 9 offen ist.

Die genannte Wachspatrone 7 ist im Übrigen derart bemessen, dass der Querschnitt des Hohlraumes ausgefüllt ist und es liegt diese Wachspatrone 7 an ihrem, der Modellierspitze 6 abgekehrten Ende an einem Kolben 10 an, der innerhalb des Grundkörpers des Modelliergerätes 1 in Richtung der Pfeile 11 gleitfähig aufgenommen ist.

Mit 12 ist eine Gewindespindel bezeichnet, deren eines Ende mit dem Kolben 10, der innerhalb des Grundkörpers unverdrehbar aufgenommen ist, in Verbindung steht und die an ihrem anderen Ende in zeichnerisch nicht dargestellter Weise in einer Spindelmutter aufgenommen ist, die mittels eines, innerhalb des Grundkörpers angeordneten, zeichnerisch ebenfalls nicht wiedergegebenen Elektromotors drehbar ist. Eine Drehung der Spindelmutter wird somit in eine dementsprechend axiale Bewegung des Kolbens 10 in Richtung der Pfeile 11 umgesetzt.

Der genannte Grundkörper ist an seinem, dem Ende 5 zugekehrten Bereich mit einer Ausnehmung versehen, welche in etwa die Länge einer Schiebemuffe 13 aufweist, die entlang des Grundkörpers verschiebbar ist, um diese Ausnehmung entweder freizulegen oder zu verschließen. Es ist diese Ausnehmung dahingehend bemessen, dass eine Wachspatrone 7 in den genannten Hohlraum des Grundkörpers eingeführt werden kann.

Die Modellierspitze 6 besteht aus einem ersten, sich in Achsrichtung des Grundkörpers erstreckenden Teil und einem gegenüber diesem schräg zu dessen Achse abgewinkelten, in der Mündung 9 endenden Teil.

Zeichnerisch nicht dargestellt sind zwei Sensorschalter, über die einerseits der dem Kolben 10 zugeordnete Motor und andererseits die, auf den Endbereich der Wachspatrone und bzw. das, sich innerhalb des Kanals 8 befindliche Wachs zu übertragende Wärmeenergie steuerbar ist. Besonders vorteilhaft kann der Kanal 8 einen, sich in Richtung auf die Mündung 9 hin erweiternden Querschnittsverlauf aufweisen.

Regelmäßig wird über die Energieversorgungseinheit 3 eine Grunderwärmung bereitgestellt, insbesondere eingeregelt, so dass über den entsprechenden Sensorschalter an dem Modelliergerät 1 lediglich Leistungsspitzen für den Wärmebedarf gesteuert werden. Diese Leistungsspitzen können vorzugsweise zur Beheizung der metallischen Modellierspitze 6 benutzt werden.

Das Kabel 2 ist erfindungsgemäß an dem vorderseitigen, das heißt der Modellierspitze 6 zugekehrten Ende 5 des Grundkörpers angesetzt. Faktisch kann der Ansatzpunkt des Kabels 2 etwa im Bereich des vorderen Drittels der Längserstreckung des Grundkörpers angeordnet sein. Dieser ist zu diesem Zweck mit einem Anschlusspunkt 15 versehen, über welchen das Kabel 2 unter einem rechten Winkel zur Längsachse 16 aus dem Grundkörper herausgeführt ist. In Betracht kommt auch ein stumpfer Winkel, so dass das Kabel 2 zum rückwärtigen, d.h. der Modellierspitze abgekehrten Ende des Grundkörpers hin geführt ist.

Besonders vorteilhaft kann der Anschlusspunkt 15 unmittelbar am vorderseitigen Ende des Grundkörpers angebracht sein. Die Anwendung sowie die Funktion einer Schiebemuffe 13 (Fig. 1) wir in diesem Fall nicht beeinträchtigt.

Wie in Fig. 1 gezeigt, ist die Modellierspitze bezüglich der Längsachse 16 des Modelliergerätes 1 gekrümmt ausgebildet und erstreckt sich unter einem stumpfen Winkel zu dieser Längsachse. Aus arbeitstechnischen Gründen befindet sich der Anschlusspunkt 15 für das Kabel 2 auf der konkaven Krümmungsseite der Modellierspitze 6, so dass bei Arbeiten mit dem Gerät das Kabel zur Unterseite hin heraustritt und die Handhabungsmöglichkeiten des Gerätes nicht behindert.

Anstelle einer Schiebemuffe 13 kann in diesem Fall, soweit die räumliche Platzierung des Anschlusspunktes 15 dies erforderlich macht, ein anderes Klapp- oder Schiebelement vorgesehen sein, mittels welchem eine Ausnehmung des Grundkörpers freilegbar bzw. verschließbar ist, welche dem Einführen von Wachspatronen in das Modelliergerät 1 dient.

Hauptanwendungsgebiet des erfindungsgemäßen Modelliergeräts 1 ist das Aufwachsen beispielsweise des Kronenbereichs des Zahngrundkörpers einer Prothese und es wird zu diesem Zweck ein Wachskörper 7 in das Modelliergerät 1 eingesetzt. Anschließend wird mittels der Energieversorgungseinheit 3 über das Kabel 2 elektrische Energie mit der Maßgabe dem Modelliergerät 1 zugeführt, dass einerseits durch Betätigen des jeweiligen Sensorschalters der genannte Motor aktivierbar ist und infolgedessen der Wachskörper 7 in Richtung auf das Ende 5 des Grundkörpers hingeschoben wird. Ebenfalls durch Betätigung einer anderen Sensortaste kann die elektrische Beheizung des Endbereichs der Wachssubstanz erfolgen, so dass nach Maßgabe der über den Kolben 10 generierten Zuführbewegung verflüssigter Wachs aus der Mündung 9 der Modellierspitze 6 austritt und mittels dieser auf den Zahngrundkörper übertragen und anschließend modelliert wird. Wesentlich ist in diesem Zusammenhang, dass der Motor in Verbindung mit der genannten Gewindespindel 12 von seinen elektrischen Parametern derart angelegt ist, dass eine vorzugsweise stufenlose Drehzahl- und damit Vorschubregelung innerhalb eines Aussteuerungsbereichs gegeben ist.

Die dem Motor zugeordnete Steuerung kann vorteilhafterweise derart angelegt sein, dass der Kolben 10 in seine rückwärtige, dass heißt an dem der Modellierspitze 6 abgekehrten Ende des Grundkörpers gelegene Stellung automatisch überführt wird, sobald während des Vorschubs des Wachskörpers 7 ein Hindernis, eine Klemmung oder dergleichen vorliegt. Dieser Störungszustand kann optisch oder akustisch signalisiert werden.

Das elektrische Konzept der Beheizung kann ferner derart angelegt sein, dass bereits ohne Sensorbetätigung eine Vorerwärmung stattfindet, die jedoch noch nicht zu einem Austreten von Wachs aus der Mündung 9 führt. Infolge einer Sensorbetätigung hingegen kann eine weitergehendere Erwärmung insbesondere im Bereich der Modellierspitze und damit ein Austreten verflüssigter Wachssubstanz erreicht werden. Die auf diese Weise mittels eines Sensors gesteuerte Beheizung der Wachssubstanz kann vorteilhafterweise ferner derart angelegt sein, dass innerhalb eines Aussteuerungsbereiches das Wärmeeinbringen steuerbar ist, so dass im Bereich der Mündung 9 ein Wachs in einer Menge und in einer, für den Modelliervorgang benötigten Konsistenz zur Verfügung gestellt wird. Ein Einregeln eines Grundwärmebedarfs kann über die Energieversorgungseinheit 3 vorgenommen werden.

Unabhängig vor Ort der Anbindung des Kabels 2 an den Grundkörper des Modelliergerätes 1 können in der Innenseite des Grundkörpers Nuten zur Aufnahme elektrischer Leitungen vorgesehen sein. über welche einerseits der genannte Motor und andererseits die sich an dem Ende 5 des Grundkörpers befindliche Beheizungseinrichtung mit elektrischer Energie versorgt werden.

Das an dem Anschlusspunkt 15 angesetzte Kabel 2 kann sich jedoch auch unter einem beliebigen Winkel zur Längsachse des Modelliergerätes 1 erstrecken bzw. an dieses angesetzt sein.

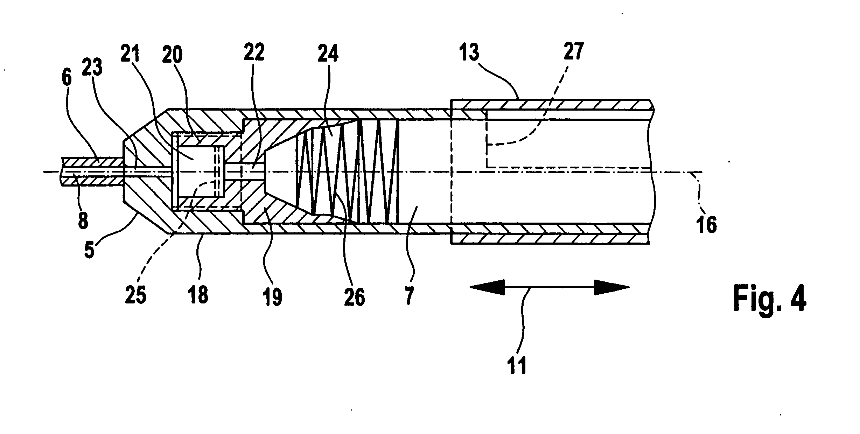

Anhand der Fig. 4 bis 10 werden im Folgenden weitere beispielhafte Ausgestaltungsmöglichkeiten des erfindungsgemäßen Modelliergerätes erläutert werden, wobei wiederum Funktionselemente, die mit denjenigen der Fig. 1 bis 3 übereinstimmen, entsprechend beziffert sind, so dass auf eine diesbezügliche wiederholte Beschreibung verzichtet werden kann.

Wesensmerkmal des in Fig. 4 gezeigten Ausführungsbeispiels eines Modelliergerätes 18 ist ein Einsatzteil 19, welches über einen vorderseitigen, das heißt dem Ende 5 zugekehrt angeordneten Gewindeabschnitt 20 in eine entsprechende Gewindebohrung des Gehäuses des Modelliergerätes 18 eingeschraubt ist. Der Gewindeabschnitt 20 ist von geringerem Durchmesser als der sich an diesen anschließende übrige Grundkörper des Einsatzteils 10 und umschließt einen zylindrischen Hohlraum 21, der sich koaxial zu der Längsachse 16 des Modelliergerätes 18 erstreckt. Ebenfalls koaxial zu dieser Längsachse 16 erstrecken sich Bohrungen 22, 23, über welche der Hohlraum 21 einerseits mit dem, zur Aufnahme des Wachskörpers 7 bestimmten Raum und andererseits mit dem Kanal 8 der Modellierspitze 6 steht. Das Einsatzteil 19 umschließt auf seinem, dem Gewindeabschnitt 20 abgekehrten Ende seinerseits einen Hohlraum 24, der sich in Richtung auf die Wachspatrone 7 hin global konisch erweitert.

Innerhalb des Hohlraumes 21 ist in zeichnerisch nicht näher dargestellter Weise ein feinmaschiges Sieb 25 angeordnet, wobei die Befestigung des Siebes derart beschaffen sein muss, dass seine Position durch das, diesen Hohlraum 21 durchströmende verflüssigte Wachs nicht verändert wird.

Der ebenfalls genannte weitere Hohlraum 24 des Einsatzteils 19 dient der Aufnahme einer Feder 26, deren eines Ende an zugekehrten Flächenabschnitten des Hohlraums 24 und deren gegenüberliegendes Ende an der zugekehrten Stirnseite des Wachskörpers 7 anliegt.

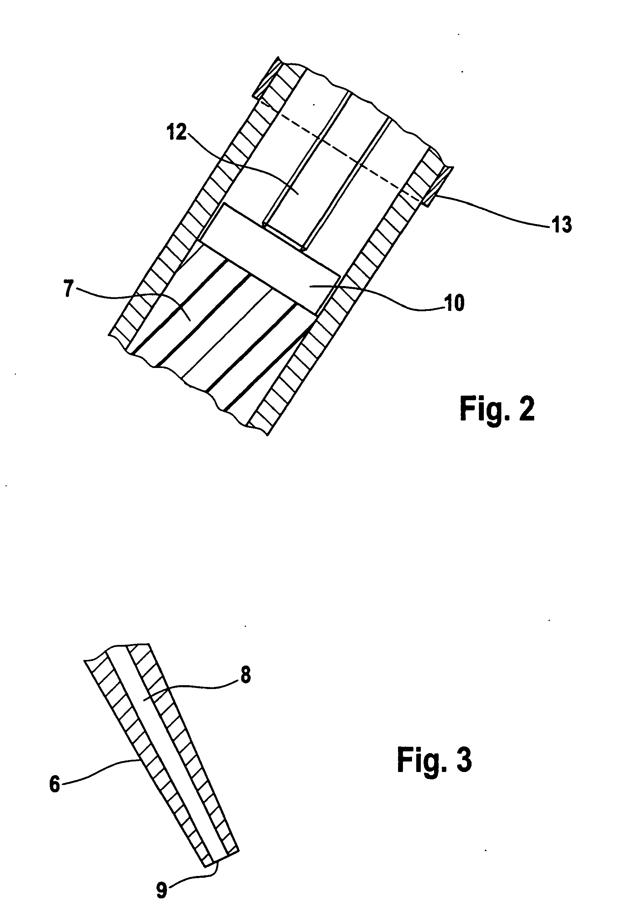

Die Feder 26 bewirkt, dass sich der Wachskörper 7 stets in Anlage an dem Kolben 10 (Fig. 2) befindet und somit eine definierte Ausgangslage aufweist. Um zu vermeiden, dass über die regelmäßig metallische Feder übermäßig Wärme auf den Wachskörper 7 übertragen wird, kann an den Berührungsstellen zwischen der Feder 26 und dem Wachskörper 7 ein zeichnerisch nicht dargestelltes lsolierelement angeordnet sein, welche aus einem Werkstoff von geringer Wärmeleitfähigkeit besteht.

Zeichnerisch noch angedeutet ist in Fig. 4 eine Ausnehmung 27, die durch Verschiebung der Schiebemuffe 13 in Richtung der Pfeile 11 freilegbar oder schließbar ist, beispielsweise um nach Verbrauch eines Wachskörpers einen neuen Wachskörper 7 in das Modelliergerät 18 einzuführen.

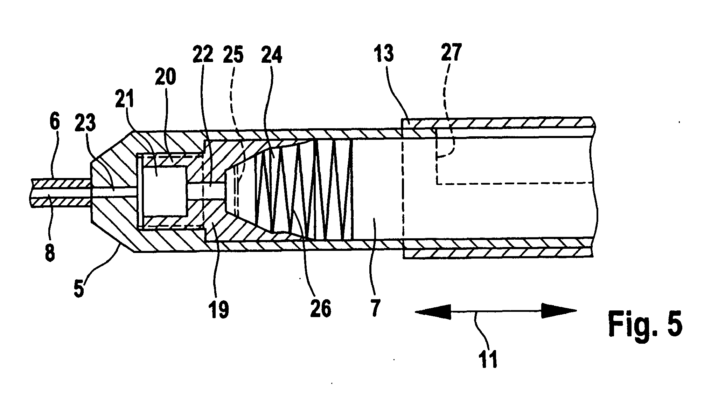

Das in Fig. 5 gezeigte Ausführungsbeispiel eines Modelliergerätes unterscheidet sich von demjenigen gemäß Fig. 5 lediglich darin, dass ein Sieb 25 nunmehr innerhalb des Hohlraumes 24 des Einsatzteils 19 aufgenommen ist.

Die Anordnung eines Siebes 25 ausgangsseitig bezüglich des Modelliergerätes bringt ein erhöhtes Maß an Betriebssicherheit mit sich, da feinste Verunreinigungen der Substanz des Wachskörpers praktisch unvermeidbar sind, wobei diese Verunreinigungen insbesondere im Bereich des Kanals 8 der Modellierspitze 6 Störungen auslösen können, die regelmäßig einen Durchtritt an verflüssigtem Wachs verhindern. Reinigungsarbeiten der Modellierspitze 6 gestalten sich aufgrund deren extrem geringen Durchmessers relativ mühsam und zeitaufwendig, so dass die Anordnung eines Siebes insoweit Abhilfe schaffen kann.

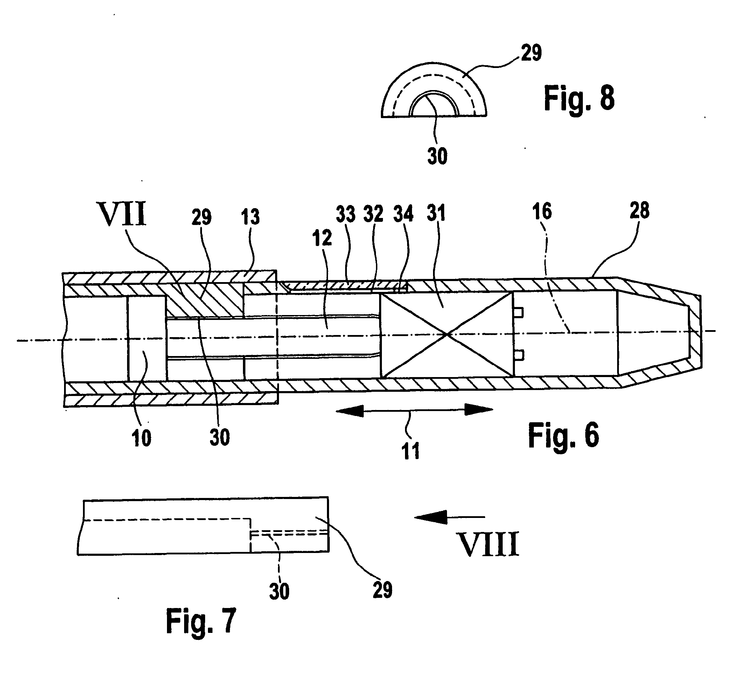

Die Fig. 7 bis 9 zeigen eine beispielhafte Ausgestaltung des Antriebskonzepts eines erfindungsgemäßen Modelliergerätes 28. Mit 29 ist eine Halbschale bezeichnet, die in eine dementsprechende Ausnehmung des Gehäuses des Modelliergerätes 28 eingesetzt ist und in der Einsetzposition vorzugsweise elastisch verrastet ist. Es kommt auch eine magnetische Sicherung in Betracht. Auf eine Darstellung dementsprechender Verrastungsmittel ist in der Zeichnung jedoch verzichtet worden. Die Halbschale 29 verschließt diejenige Ausnehmung, die zum Einsetzen von Wachskörpem bestimmt ist, wobei die Halbschale 29 im eingesetzten Zustand einen Bestandteil der Gehäusewandung des Modelliergerätes 28 bildet, welches von der Schiebemuffe 13 umgeben ist.

Die Halbschale 29 ist an Ihrem einen Ende einstückig mit einem Gewindeabschnitt 30 versehen, der zum Eingriff mit dem Gewinde der Gewindespindel 12 bestimmt ist. Die Halbschale 29 ist somit im Einbauzustand relativ zu der Längsachse 16 des Modelliergerätes 28 unverdrehbar gehalten. Der Gewindeabschnitt 30 erstreckt sich ausgehend von dem einem Ende der Halbschale 29 über lediglich eine Teillänge derselben, wohingegen die Halbschale im Übrigen auch innenseitig den Umfangsbereich des Gehäuses des Modelliergerätes 28 nachbildet und somit zur Führung des Kolbens 10 angelegt ist. Wesentlich ist, dass der Kolben 10 innerhalb des auf diese Weise gebildeten Raumes bezüglich der Längsachse 16 ebenfalls unverdrehbar geführt ist.

In der zeichnerischen Darstellung gemäß Fig. 6 ist die Halbschale 29 formschlüssig infolge eines Überschiebens der Schiebemuffe 13 in ihrer Montageposition gesichert. Dies ist lediglich beispielhaft zu verstehen. So kommt auch als Sicherungsbauteil eine auf dem Grundkörper um dessen Achse drehbare Muffe in Betracht, die mit einer Ausnehmung zur Entnahme der Halbschale versehen ist, so dass nach Maßgabe der Drehwinkelstellung dieser Muffe wiederum eine formschlüssige Sicherung der Halbschale gegeben ist.

Die Gewindespindel 12 steht an ihrem, den Kolben 10 abgekehrten Ende mit einem Motor 31, hier einem Elektromotor in Antriebsverbindung, der ebenfalls innerhalb des Gehäuses des Modelliergerätes 28 bezüglich der Längsachse 16 unverdrehbar geführt ist. Man erkennt, dass bei dieser Konstellation nach Maßgabe der, über den Motor 31 auf die Gewindespindel 12 übertragenen Drehrichtung die gesamte Baugruppe, bestehend aus dem Motor 31, der Gewindespindel 12 und dem Kolben 10 in Richtung der Pfeile 11 geradlinig bewegbar ist.

Die Zeichnungsfigur 6 zeigt den Kolben 10 in seiner einen Grenzstellung, in welcher nach entsprechender Verschiebung der Schiebemuffe 13 und Entnahme der Halbschale 29 ein neuer Wachskörper in das Modelliergerät einsetzbar ist. In diesem Zusammenhang bietet die gezeigte Vorrichtung noch den Vorteil, dass nach Demontage der Halbschale 29 der Kolben 10 in einfachster Weise manuell in seine rückwärtige, in der Fig. 6 gezeigte Grenzstellung verschiebbar ist.

Das gezeigte Funktionsprinzip ist im Übrigen in vielfältiger Weise abwandelbar. So kann der Halbschale 29, insbesondere deren Gewindeabschnitt 30 ein weiterer halbschalenartiger Gewindeabschnitt gegenüberliegen, der ebenfalls relativ zu der Längsachse 16 unverdrehbar angeordnet ist, so dass die Gewindespindel 12 durch ein komplettiertes verdrehfest angeordnetes Gewindeprofil hindurchgeführt wird. Allerdings entfällt in diesem Fall der Vorteil des einfachen manuellen Zurückschiebens des Kolbens 10, nachdem ein Wachskörper verbraucht worden ist.

Ein Gewindeprofil 30 kann darüber hinaus unter Beibehaltung des Antriebskonzeptes im Übrigen auch axial fest und unverdrehbar an einer anderen Stelle des Innenraumes des Gehäuses des Modelliergerätes 28 angeordnet sein.

Mit 32 ist eine langlochartige Öffnung in der Wandung des Modelliergerätes 28 bezeichnet, die außenseitig mittels einer durchsichtigen Abdeckung 33 verschlossen ist. Die Abdeckung 33 schließt bündig mit der äußeren Oberfläche des Modelliergerätes 28 ab und weist eine Dicke auf, die wesentlich geringer bemessen als die Wandungsdicke des Gerätegehäuses. Innerhalb des verbleibenden Dickenbereiches der Öffnung 32 ist ein beispielsweise quaderförmiger Signalkörper 34 aufgenommen, der mit dem Motor 31 in fester Verbindung steht. Der Signalkörper 34 weist zweckmäßigerweise eine besondere Farbgebung auf, so dass ein einfaches Erkennen seiner Position entlang der Öffnung 32 gegeben ist.

Es ist die Öffnung 32 vorzugsweise nach Maßgabe einer solchen Längserstreckung angelegt, die der Verschiebemöglichkeit des Motors 31 überhaupt entspricht, so dass anhand der Position des Signalkörpers 34 erkennbar ist, wie weit der in das Modelliergerät eingesetzte Wachskörper bereits verbraucht ist. Gegebenenfalls kann hierzu auf der Außenseite des Gerätes auch noch eine Skala angebracht sein, welche den Restgehalt an verarbeitungsfähigem Wachs anzeigt.

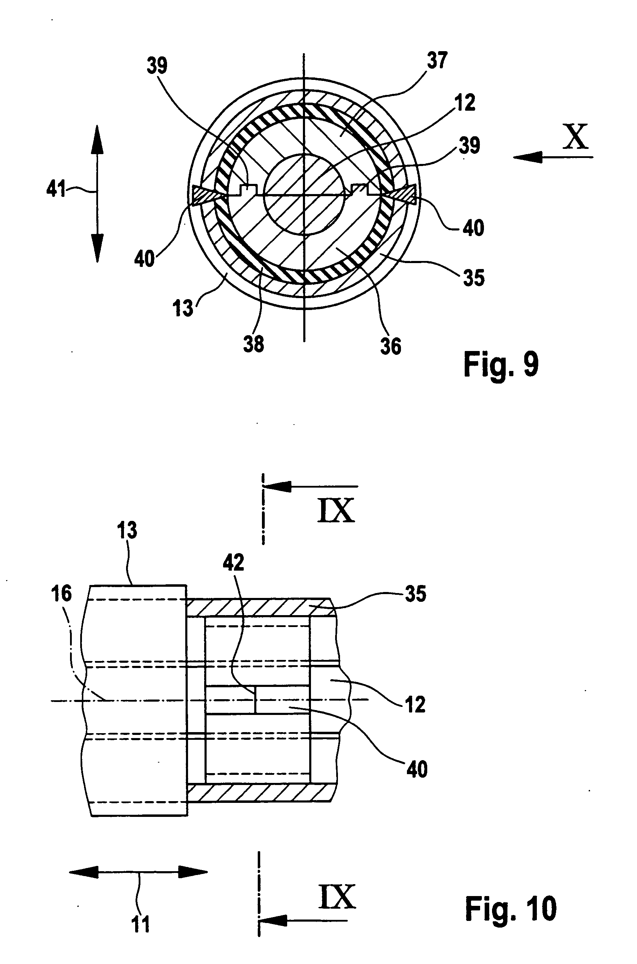

Die Fig. 9 und 10 zeigen eine weitere mögliche Ausgestaltungsform des Antriebskonzepts der Erfindung. Die Gewindespindel 12 steht hierbei mit einer längsgeteilten, somit aus zwei Halbschalen 36, 37 zusammengesetzten Spindelmutter im Eingriff, welche unter Zwischenanordnung eines aus einem elastischen Werkstoff, z.B. einem elastomeren Werkstoff bestehenden Lagerringes 38 in dem Modelliergerät 35 axial unverschiebbar und bezüglich der Längsachse 16 unverdrehbar angeordnet ist. Beispielsweise kann der Lagerring 38 aus Gummi bestehen, der mit den zugekehrten Oberflächen des Modelliergerätes 35 einerseits und den Halbschalen 36, 37 andererseits verklebt ist. Zur Sicherstellung einer eindeutigen Montageposition der beiden Halbschalen 36, 37 stehen diese in ihrer Teilungsebene formschlüssig im Eingriff. Zu diesem Zweck sind an der Halbschale 36, und zwar aus der Teilungsebene herausragend zwei leistenartige Vorsprünge 39 angeformt, die in entsprechende, diesen gegenüberliegende Nuten der Halbschale 37 eingefügt sind und die Position der beiden Halbschalen relativ zueinander stabilisieren.

Längsgeteilt ausgebildet ist der Lagerring 38, wobei in den, sich in Richtung der Längsachse 16 erstreckenden Spalt zwischen den beiden Halbschalen des Lagerringes 38, somit einander diametral gegenüberliegend keilförmige, untereinander gleichbemessene und beschaftene Trennkörper 40 hineinragen. Diese Trennkörper durchdringen ferner sich in Längsrichtung des Modelliergerätes 35 erstreckende Ausnehmungen dessen Gehäuses und können darüber hinaus, wie in Fig. 10 gezeigt, in Längsrichtung 16 beiderseits bezüglich einer Mittelebene eine rampenartig abfallende, das heißt auf der äußeren Oberfläche der Gehäusewandung des Modelliergerätes 35 herausragende Abschnitte aufweisen. Die Trennkörper 40 sind darüber hinaus mit der Maßgabe angelegt, dass diese infolge eines Überschiebens der Schiebemuffe 13 bezogen auf das Modelliergerät 35 radial einwärts verschoben werden und infolge ihrer keilförmigen Gestaltung auf die beiden Halbschalen 36, 37 Trennkräfte in Richtung der Pfeile 41 ausüben. Die Trennkörper 40 sind ferner dahingehend bemessen und angelegt, dass über diese Trennkräfte die Halbschalen 36, 37 unter elastischer Kompression der mit diesen zusammenwirkenden Halbschalen des Lagerrings 38 soweit voneinander entfernt werden, dass ein Gewindeeingriff zwischen dem Innengewinde der Halbschalen 36, 37 und der Gewindespindel 12 gelöst ist. Dieser Zustand ist erreicht, wenn die Schiebemuffe 13 den Scheitelpunkt 42 der Trennkörper 40 erreicht hat, so dass in der Folge der Kolben 10 (Fig. 2) und mit diesem die gesamte Baugruppe bestehend aus der Gewindespindel 12 und dem an dieser angebrachten Motor manuell bis in ihre rückwärtige Stellung zurückschiebbar ist.

Es sind weitere zahlreiche Modifikationen des Anmeldungsgegenstands möglich. So kann eine mit dem Motor 31 zusammenwirkende Energieversorgungseinheit 3 dahingehend angelegt sein, dass nach erfolgtem Vorschub des Motors, das heißt nachdem auf den Wachskörper 7 eine diesen in Richtung auf das Ende 5 hin vorschiebende Kraft ausgeübt worden ist, selbsttätig eine Rückwärtsbewegung des Kolbens 10 von dem Ende 5 fort um ein wählbares Wegelement eingeleitet wird. Über diese Maßnahme kann ein Beitrag zum Verhindern eines Nachfließens von verflüssigtem Wachs aus der Modellierspitze 6 heraus geleistet werden.

Ferner kann dass Modelliergerät an seinem Ende 5 mit einem vorzugsweise elektromagnetisch betätigbaren Ventil versehen sein, über welches der Fluss an Wachs in die Modellierspitze hinein freigegeben oder gesperrt werden kann. Auch auf diesem Wege kann ein Nachfließen an Wachs verhindert werden, wobei davon auszugehen ist, dass bei den äußerst geringen Querschnittsabmessungen des Kanals 8 innerhalb der Modellierspitze 6 der in diesem Kanal vorhandene Wachs auch infolge der auf diesen ausgeübten Kapillarwirkung zurückgehalten wird.

Es sind somit zahlreiche Vorkehrungen getroffen, die ein äußerst bequemes Arbeiten ermöglichen und eine sehr genaues Dosieren der Menge an verflüssigtem Wachs, die aus der Mündung der Modellierspitze 6 austritt.

## Patentansprüche

1. Modelliervorrichtung zum manuellen Auftragen und Modellieren von unter Wärme fließfähigen Substanzen, nämlich Wachs, bestehend aus einem Modelliergerät (1,18,28,35) sowie einer Energieversorgungseinheit (3), die über ein Kabel (2) miteinander in Verbindung stehen, wobei die Energieversorgungseinheit (3) zur Bereitstellung und Übertragung elektrischer Energie zu dem Modelliergerät mit der Maßgabe eingerichtet ist, dass die Substanz in einen fließfähigen Zustand überführbar ist und über die Mündung (9) einer Modellierspitze (6) ausgetragen werden kann, mit einem zur Förderung der zu verarbeitenden Substanz in Richtung auf das, der Modellierspitze (6) zugekehrte Ende (5) des Grundkörpers des Modelliergerätes hin bestimmten motorischen Vorschubantrieb, mit einer Beheizungseinrichtung, die dazu bestimmt und eingerichtet ist, die Substanz lediglich an dem Ende (5) des Grundkörpers in einen fließfähigen Zustand zu überführen, so dass in Verbindung mit der, über den Vorschubantrieb bewirkten Bewegung der Substanz diese aus der Mündung (9) austragbar ist und einer Schalteinrichtung zum Steuern des Vorschubantriebs sowie der Beheizungseinrichtung, wobei die Substanz im Ausgangszustand als Festkörper, nämlich in der Form einer Wachspatrone (7) vorliegt, die in den Grundkörper einlegbar ist und in diesem in Wirkverbindung mit dem Vorschubantrieb steht und wobei der Vorschubantrieb einen Elektromotor aufweist, **dadurch gekennzeichnet, dass** der Grundkörper an seinem dem Ende (5) zugekehrten Bereich mit einer, zum Einsetzen der Wachspatrone (7) bestimmten, verschließbaren Ausnehmung (27) versehen ist, dass der Vorschubantrieb ferner neben einem Kolben (10) eine Spindelmutter und eine, unmittelbar mit dem Kolben (10) in Verbindung stehende Gewindespindel (12) aufweist, wobei der Kolben (10) das Kraftübertragungsglied zwischen der Gewindespindel (12) und der zu verarbeitenden Substanz bildet und dass das Kabel (2) am vorderen, d. h. der Modellierspitze (6) zugekehrten Bereich des Grundkörpers des Modelliergerätes angesetzt ist.

2. Modelliervorrichtung nach Anspruch 1, **dadurch gekennzeichnet, dass** die Beheizungseinrichtung durch eine Spulenanordnung gebildet ist, über welche die genannte Substanz mit Hinblick auf die Bereitstellung eines fließfähigen Zustands beheizbar ist.

3. Modelliervorrichtung nach Anspruch 2, **gekennzeichnet durch** mehrere, **durch** unterschiedliche Heizleistungen charakterisierbare, getrennt voneinander steuerbare Spulenanordnungen.

4. Modelliervorrichtung nach einem der vorangegangenen Ansprüche 1 bis 3, **dadurch gekennzeichnet, dass** die Modellierspitze (6) einen Endabschnitt aufweist, der sich unter einem Winkel zur Längsachse des Grundkörpers erstreckt.

5. Modelliervorrichtung nach einem der vorangegangenen Ansprüche 1 bis 4, **dadurch gekennzeichnet, dass** die Schalteinrichtung aus Sensoren besteht, die zur Steuerung des Vorschubs sowie der Beheizung bestimmt und geschaltet sind.

6. Modelliervorrichtung nach einem der vorangegangenen Ansprüche 1 bis 5, **dadurch gekennzeichnet, dass** die Beheizung steuerbar ist.

7. Modelliervorrichtung nach einem der vorangegangenen Ansprüche 1 bis 6, **dadurch gekennzeichnet, dass** die Vorschubbewegung steuerbar ist.

8. Modelliervorrichtung nach einem der vorangegangenen Ansprüche 1 bis 7, **dadurch gekennzeichnet, dass** die Beheizungseinrichtung zusätzlich zur steuerbaren Beheizung der Modellierspitze (6) eingerichtet ist.

9. Modelliervorrichtung nach einem der vorangegangenen Ansprüche 1 bis 8, **gekennzeichnet durch** einen, den Rücklauf des Vorschubantriebs in eine Ausgangsposition bewirkenden Endschalter.

10. Modelliervorrichtung nach einem der vorangegangenen Ansprüche 1 bis 9, **dadurch gekennzeichnet, dass** die Spindelmutter des Vorschubsantriebs innerhalb des Gehäuses des Modelliergerätes (1,18,28,35) unverschiebbar und unverdrehbar angeordnet ist und dass der Motor (31) des Vorschubantriebs innerhalb des Gehäuses verschiebbar, jedoch unverdrehbar gehalten ist.

11. Modelliervorrichtung nach Anspruch 10, **dadurch gekennzeichnet, dass** die Spindelmutter durch eine Halbschale (29) gebildet ist, die lösbar mit dem Gehäuse des Modeliergerätes in Verbindung steht.

12. Modelliervorrichtung nach Anspruch 10, **dadurch gekennzeichnet, dass** die Spindelmutter durch zwei einander zu einer vollständigen Zylinderschale komplettierende Halbschalen (36,37) gebildet ist, die innerhalb des Gehäuses des Modeliergerätes in einer ersten, durch einen Eingriff mit dem Gewinde der Gewindespindel (12) charakterisierten Stellung und einer zweiten Stellung bewegbar sind, in der dieser Gewindeeingriff gelöst ist.

13. Modelliervorrichtung nach Anspruch 12, **gekennzeichnet durch** Trennkörper (40), die zum Zusammenwirken mit einer Schiebemuffe (13) bestimmt und eingerichtet sind und mittels welchen eine Kraft senkrecht zu der Teilungsebene zwischen den Halbschalen (36,37) auf die Halbschalen (36,37) ausübbar ist.

14. Modelliervorrichtung nach Anspruch 11 oder 12, **dadurch gekennzeichnet, dass** die beiden Halbschalen (36,37) in einem Lagerring (38) angeordnet sind, die aus einem elastomeren Werkstoff besteht und der an der Innenseite des Gehäuses des Modelliergerätes (35) befestigt ist.

15. Modelliervorrichtung nach einem der vorangegangenen Ansprüche 12 bis 14, **dadurch gekennzeichnet, dass** die beiden Halbschalen (36,37) in ihren, entlang einer Teilungsebene aneinander liegenden Stellung zumindest in der Teilungsebene und in einer Richtung senkrecht zur Längsachse (16) des Modelliergerätes formschlüssig gesichert sind.

16. Modelliervorrichtung nach Anspruch 11, **dadurch gekennzeichnet, dass** die eine Halbschale (29) zum Verschließen der Ausnehmung (27) bestimmt und eingerichtet ist und an ihrer Innenseite einen Gewindeabschnitt (30) aufinreist, dessen Gewinde zum Zusammenwirken mit der Gewindespindel (12) bestimmt ist.

17. Modelliervorrichtung nach einem der vorangegangenen Ansprüche 1 bis 16, **gekennzeichnet durch** eine Anzeigeeinrichtung, die zur Anzeige der Bewegung, insbesondere der Position des Kolbens (10) bzw. des Motors (31) innerhalb des Gehäuses des Modelliergerätes (1,18,28,35) bestimmt und eingerichtet ist.

18. Modelliervorrichtung nach Anspruch 17, **dadurch gekennzeichnet, dass** an dem Motor (31) ein in einer Öffnung (32) des genannten Gehäuses geführter Signalkörper (34) angeformt ist.

19. Modelliervorrichtung nach einem der vorangegangenen Ansprüche 1 bis 18, **dadurch gekennzeichnet, dass** die Wachspatrone (7) an ihrem, der Modellierspitze (6) zugekehrten Ende stimseitig an einer Feder (26) anliegt.

20. Modelliervorrichtung nach einem der vorangegangenen Ansprüche 1 bis 19, **gekennzeichnet durch** ein sich im Strömungsweg des verflüssigten Wachses befindliches Sieb (25).

21. Modelliervorrichtung nach Anspruch 20, **gekennzeichnet durch** ein als Träger des Siebes (25) angelegtes, in das Ende (5) des Gehäuses des Modelliergerätes (14,18,28,35) einschraubbares bzw. einsteckbares Einsatzteil (19).

22. Modelliervorrichtung nach einem der vorangegangenen Ansprüche 1 bis 21, **gekennzeichnet durch** ein schaltbares Ventil, welches in einem, dem Anschlusspunkt der Modellierspitze (6) zumindest benachbarten Bereich angeordnet ist und zum Sperren bzw. zur Freigabe einer aus verflüssigtem Wachs bestehenden Strömung eingerichtet ist.

23. Modelliervorrichtung nach einem der vorangegangenen Ansprüche 1 bis 22, **dadurch gekennzeichnet, dass** die über die Energieversorgungseinheit (3) bewirkte Steuerung der Vorschubbewegung des Kolbens (10) mit der Maßgabe angelegt ist, dass nach Abschluss einer Vorschubbewegung der Kolben (10) automatisch um ein wählbares Wegelement rückwärts, d.h. in Richtung von der Modellierspitze (6) fort bewegt wird.

24. Modelliervorrichtung nach einem der vorangegangenen Ansprüche 1 bis 23, **dadurch gekennzeichnet, dass** die Energieversorgungseinheit (3) einen Energiespeicher in der Form einer elektrischen Batterie aufweist.

25. Modelliervorrichtung nach einem der vorangegangenen Ansprüche 1 bis 24, **dadurch gekennzeichnet, dass** die Modellierspitze (6) auswechselbar mit dem Modelliergerät (1,18,28,35) in Verbindung steht.

26. Modelliervorrichtung nach einem der vorangegangenen Ansprüche 1 bis 25, **dadurch gekennzeichnet, dass** der langgestreckte Grundkörper des Modelliergerätes (1,18,28,35) eine im Querschnitt global dreieckförmige Gestalt aufweist.

## Claims

1. Modeling device for manually applying and modeling substances, namely wax, which are flowable when subjected to heat, consisting of a modeling device (1, 18,28, 35) and an energy supply unit (3) which are mutually connected via a cable (2), wherein the energy supply unit (3) is designed for providing and transmitting electrical energy to the modeling device with the stipulation that the substance can be converted into a flowable state and can be dispensed via the outlet (9), of a modeling tip (6), having a motorized forward feed drive intended for conveying the substance to be processed in the direction of the end (5), facing the modeling tip (6), of the base body of the modeling device, having a heating device which is intended and designed for the purpose of converting the substance only at the end (5) of the base body into a flowable state, so that in connection with the movement of the substance created by the forward feed drive, the said substance can be discharged from the outlet (9), and having a switching device for controlling the forward feed drive and the heating device, wherein the substance is a solid body in the initial state, namely in the form of a wax cartridge (7), which can be inserted into the base body and in this is operatively connected to the forward feed drive and wherein the forward feed drive comprises an electromotor, **characterized in that** the base body is provided on its region facing the end (5) with a cut-out (27) which is intended for inserting the wax cartridge (7) and which can be closed, that moreover the forward feed drive in addition to a piston (10) comprises a spindle nut and a threaded spindle (12) which is connected directly to the piston (10), wherein the piston (10) forms the force-transmitting member between the threaded spindle (12) and the substance to be processed and that the cable (2) is attached to the front region of the base body of the modeling device, i.e. to the region facing the modeling tip (6).

2. Modeling device as claimed in Claim 1, **characterized in that** the heating device is formed by a coil arrangement by means of which the said substance can be heated with a view to converting it into a flowable state.

3. Modeling device as claimed in Claim 2, **characterized by** several coil arrangements which can be controlled separately from each other and which can be **characterized by** different heating capacities.

4. Modeling device as claimed in any of the preceding Claims 1 to 3, **characterized in that** the modeling tip (6) comprises an end section which extends at an angle with respect to the longitudinal axis of the base body.

5. Modeling device as claimed in any of the preceding Claims 1 to 4, **characterized in that** the switching device consists of sensors which are intended and switched for the purpose of controlling the forward feed and the heating process.

6. Modeling device as claimed in any of the preceding Claims 1 to 5, **characterized in that** the heating process can be controlled.

7. Modeling device as claimed in any of the preceding Claims 1 to 6, **characterized in that** the forward feed movement can be controlled.

8. Modeling device as claimed in any of the preceding Claims 1 to 7, **characterized in that** the heating device can also be designed for heating the modeling tip (6) in a controlled manner.

9. Modeling device as claimed in any of the preceding Claims 1 to 8, **characterized by** an end switch which causes the forward feed drive to return to an initial position.

10. Modeling device as claimed in any of the preceding Claims 1 to 9, **characterized in that** the spindle nut of the forward feed drive is disposed in a non-displaceable and nonrotatable manner within the casing of the modeling device (1, 18, 28, 35) and that the motor (31) of the forward feed drive is held in a displaceable but non-rotatable manner within the casing.

11. Modeling device as claimed in Claim 10, **characterized in that** the spindle nut is formed by a half-shell (29) which is releasably connected to the casing of the modeling device.

12. Modeling device as claimed in Claim 10, **characterized in that** the spindle nut is formed by two half-shells (36, 37) which when complete form with each other a full cylindrical shell and which can be moved within the casing of the modeling device in a first position **characterized by** an engagement with the thread of the threaded spindle (12) and in a second position in which this threaded engagement is released.

13. Modeling device as claimed in Claim 12, **characterized by** separating bodies (40) which are intended and designed for cooperating with a sliding sleeve (13) and by means of which a force can be exerted on the half-shells (36,37) perpendicular to the joint face between the half-shells (36,37).

14. Modeling device as claimed in Claim 11 or 12, **characterized in that** the two half-shells (36,37) are disposed in a bearing ring (38) which consists of an elastomeric material and which is attached to the inner side of the casing of the modeling device (35).

15. Modeling device as claimed in any of the preceding claims 12 to 14, **characterized in that** the two half-shells (36,37) in their position lying against each other along a joint face are secured in a form-locking manner at least in the joint face and in a direction perpendicular to the longitudinal axis (16) of the modeling device.

16. Modeling device as claimed in Claim 11, **characterized in that** the one half-shell (29) is intended and designed for closing the cut-out (27) and comprises on its inner side a threaded section (30), the thread of which is intended for cooperating with the threaded spindle (12).

17. Modeling device as claimed in any of the preceding claims 1 to 16, **characterized by** a display device which is intended and designed for displaying the movement, in particular the position of the piston (10) or of the motor (31) within the casing of the modeling device (1, 18, 28, 35).

18. Modeling device as claimed in Claim 17, **characterized in that** a signal body (34) which is guided in an orifice (32) of the said casing is formed as one on the motor (31).

19. Modeling device as claimed in any of the preceding Claims 1 to 18, **characterized in that** the wax cartridge (7) rests at its end facing the modeling tip (6) at the end side on a spring (26).

20. Modeling device as claimed in any of the preceding Claims 1 to 19, **characterized by** a sieve (25) which is located in the flow path of the liquid wax.

21. Modeling device as claimed in Claim 20, **characterized by** an insertion piece (19) which is designed as a carrier of the sieve (25) and can be screwed in or inserted into the end (5) of the casing of the modeling device (14, 18, 28, 35).

22. Modeling device as claimed in, any of the preceding claims 1 to 21, **characterized by** a switchable valve which is disposed in a region at least adjacent to the connection point of the modeling tip (6) and is designed for blocking or releasing a flow consisting of liquid wax.

23. Modeling device as claimed in any of the preceding claims 1 to 22, **characterized in that** the control, effected via the energy supply unit (3), of the forward feed movement of the piston (10) is designed with the stipulation that after the forward feed movement is completed the piston (10) is automatically moved by a selectable path element rearwards, i.e. in the direction away from the modeling tip (6).

24. Modeling device according to any of the preceding claims 1 to 23, **characterized in that** the energy supply unit (3) comprises an energy reservoir in the form of an electric battery.

25. Modeling device according to any of the preceding claims 1 to 24, **characterized in that** the modeling tip (6) is connected to the modeling device (1, 18, 28, 35) in such a manner that it can be replaced.

26. Modeling device according to any of the preceding claims 1 to 25, **characterized in that** the elongated base body of the modeling device (1, 18, 28, 35) comprises a form which has a generally triangular cross-section.

## Revendications

1. Dispositif de modelage pour l'application et le modelage manuels de substances fluides, à savoir de cire, sous l'action de la chaleur, composé d'un appareil de modelage (1, 18, 28, 35) et d'une unité d'alimentation en énergie (3) qui sont reliés l'un à l'autre par un câble (2), l'unité d'alimentation en énergie (3) étant conçue pour fournir et transmettre de l'énergie électrique à l'appareil de modelage de telle manière que la substance puisse être amenée à un état liquide et puisse être déposée par l'embouchure (9) d'une pointe de modelage (6), avec un entraînement d'avancement à moteur destiné transporter la substance à travailler vers l'extrémité (5) du corps de l'appareil de modelage située du côté de la pointe de modelage (6), avec un dispositif de chauffage destiné à amener la substance à un état liquide uniquement à l'extrémité (5) du corps, de sorte qu'en relation avec le déplacement de la substance réalisée par l'entraînement d'avancement, celle-ci puisse être déposée par l'embouchure (9) et avec un dispositif de commutation pour la commande de l'entraînement d'avancement et du dispositif de chauffage, dans lequel la substance est solide dans son état initial, autrement dit la substance se présente comme une cartouche de cire (7) qui peut être introduite dans le corps et qui se trouve en relation active avec l'entraînement d'avancement dans celui-ci, et dans lequel l'entraînement d'avancement présente un moteur électrique, **caractérisé en ce que** le corps possède dans sa partie tournée vers l'extrémité (5) une cavité (27) destinée à recevoir la cartouche de cire (7) et pouvant être fermée, **en ce que** l'entraînement d'avancement comprend en outre, outre un piston (10), un écrou de tige et une tige filetée (12) en liaison directe avec le piston (10), le piston (10) formant l'organe de transmission de la force entre la tige filetée (12) et la substance à travailler, et **en ce que** le câble (2) est posé dans la partie antérieure, c'est-à-dire orientée vers la pointe de modelage (6), du corps de l'appareil de modelage.

2. Dispositif de modelage selon la revendication 1, **caractérisé en ce que** le dispositif de chauffage est formé par un arrangement d'enroulement par lequel ladite substance peut être chauffée afin d'obtenir un état fluide.

3. Dispositif de modelage selon la revendication 2, **caractérisé en ce qu'**il comporte plusieurs arrangements d'enroulement pouvant être
**caractérisés par** des puissances de chauffage différentes et commandés séparément les uns des autres.

4. Dispositif de modelage selon l'une des revendications 1 à 3, **caractérisé en ce que** la pointe de modelage (6) possède une partie d'extrémité qui s'étend en formant un angle par rapport à l'axe longitudinal du corps.

5. Dispositif de modelage selon l'une des revendications 1 à 4, **caractérisé en ce que** le dispositif de commutation se compose de capteurs destinés et montés de façon à contrôler l'avancement et le chauffage.

6. Dispositif de modelage selon l'une des revendications 1 à 5, **caractérisé en ce que** le chauffage peut être régulé.

7. Dispositif de modelage selon l'une des revendications 1 à 6, **caractérisé en ce que** le mouvement d'avancement peut être régulé.

8. Dispositif de modelage selon l'une 1 à 6, **caractérisé en ce que** le dispositif de chauffage est en outre conçu pour un chauffage régulé de la pointe de modelage (6).

9. Dispositif de modelage selon l'une des revendications 1 à 8, **caractérisé en ce qu'**il comporte un contact de fin de course produisant le retour de l'entraînement d'avancement dans une position de départ.

10. Dispositif de modelage selon l'une des revendications 1 à 9, **caractérisé en ce que** l'écrou de tige de l'entraînement d'avancement est disposé à l'intérieur du boîtier de l'appareil de modelage (1, 18, 28, 35) de manière fixe en translation et en rotation et **en ce que** le moteur (31) de l'entraînement d'avancement est retenu à l'intérieur du boîtier de manière mobile en translation mais fixe en rotation.

11. Dispositif de modelage selon la revendication 10, **caractérisé en ce que** l'écrou de tige est formé par une demi-coque (29) reliée de façon amovible au boîtier de l'appareil de modelage.

12. Dispositif de modelage selon la revendication 10, **caractérisé en ce que** l'écrou de tige est formé par deux demi-coques (36, 37) se complétant pour former une coque cylindrique complète, qui peut se déplacer à l'intérieur du boîtier de l'appareil de modelage dans une première position **caractérisée par** un engagement avec le filetage de la tige filetée (12) et une deuxième position dans laquelle cet engagement sur le filetage est défait.

13. Dispositif de modelage selon la revendication 12, **caractérisé en ce qu'**il comporte des éléments séparateurs (40) destinés à coopérer avec un manchon coulissant (13) et au moyen desquels une force peut être exercée sur les demi-coques (36, 37) perpendiculairement au plan de séparation entre les demi-coques (36, 37).

14. Dispositif de modelage selon la revendication 11 ou 12, **caractérisé en ce que** les deux demi-coques (36, 37) sont disposées dans une bague de support (38) qui se compose d'un matériau élastomère et qui est fixée sur le côté intérieur du boîtier de l'appareil de modelage (35).

15. Dispositif de modelage selon l'une des revendications 12 à 14, **caractérisé en ce que** les deux demi-coques (36, 37) sont fixées par engagement positif dans leur position reposant l'une sur l'autre le long d'un plan de séparation au moins dans le plan de séparation et dans une direction perpendiculaire à l'axe longitudinal (16) de l'appareil de modelage.

16. Dispositif de modelage selon la revendication 11, **caractérisé en ce qu'**une demi-coque (29) est destinée à fermer la cavité (27) et possède sur son côté intérieur une section filetée (30) dont le filetage est destiné à coopérer avec la tige filetée (12).

17. Dispositif de modelage selon l'une des revendications 1 à 16, **caractérisé en ce qu'**il comporte un dispositif indicateur destiné à indiquer le mouvement, en particulier la position du piston (10) ou du moteur (31) à l'intérieur du boîtier de l'appareil de modelage (1, 18, 28, 35).

18. Dispositif de modelage selon la revendication 17, **caractérisé en ce qu'**un élément de signalisation (34) guidé dans une ouverture (32) dudit boîtier est formé sur le moteur (31).

19. Dispositif de modelage selon l'une des revendications 1 à 18, **caractérisé en ce que** la cartouche de cire (7) repose par sa face, à son extrémité orientée vers la pointe de modelage (6), sur un ressort (26).

20. Dispositif de modelage selon l'une ou l'ensemble des revendications 1 à 19, **caractérisé en ce qu'**il comporte un filtre (25) situé dans le trajet d'écoulement de la cire liquéfiée.

21. Dispositif de modelage selon la revendication 20, **caractérisé en ce qu'**il comporte un insert (19) servant de support au filtre (25) et pouvant être vissé ou inséré dans l'extrémité (5) du boîtier de l'appareil de modelage (14, 18, 28, 35).

22. Dispositif de modelage selon l'une ou l'ensemble des revendications 1 à 21, **caractérisé en ce qu'**il comporte une vanne commutable, qui est disposée dans une zone au moins voisine du point de raccordement de la pointe de modelage (6) et qui est conçue pour bloquer ou libérer un courant composé de cire liquéfiée.

23. Dispositif de modelage selon l'une des revendications 1 à 22, **caractérisé en ce que** la commande de l'avancement du piston (10) réalisée par l'unité d'alimentation en énergie. (3) est conçue de telle sorte qu'après un mouvement d'avancement, le piston (10) s'écarte automatiquement vers l'arrière, c'est-à-dire en direction de la pointe de modelage (6), sur un segment de trajet pouvant être choisi.

24. Dispositif de modelage selon l'une ou l'ensemble des revendications 1 à 23, **caractérisé en ce que** l'unité d'alimentation en énergie (3) possède une réserve d'énergie prenant la forme d'une batterie électrique.

25. Dispositif de modelage selon l'une ou l'ensemble des revendications 1 à 24, **caractérisé en ce que** la pointe de modelage (6) est reliée à l'appareil de modelage (1, 18, 28, 35) de manière interchangeable.

26. Dispositif de modelage selon l'une ou l'ensemble des revendications 1 à 25, **caractérisé en ce que** le corps allongé de l'appareil de modelage (1, 18, 28, 35) possède une forme globalement triangulaire en section.
